# EUROPÄISCHE PATENTSCHRIFT

(11) **EP 1 110 172 B1**
(45) Veröffentlichungstag und Bekanntmachung des Hinweises auf die Patenterteilung: **03.12.2003**
(21) Anmeldenummer: 99946115.5
(22) Anmeldetag: 03.09.1999
(51) Int. Cl.: G06K 11/18

(54) **EINGABEGERÄT FÜR STEUERSIGNALE ZUR STEUERUNG DER BEWEGUNG EINES AUF EINER ANZEIGEVORRICHTUNG DARGESTELLTEN OBJEKTS UND GRAPHISCHE ANZEIGE MIT EINEM DERARTIGEN EINGABEGERÄT**
INPUT DEVICE FOR CONTROL SIGNALS FOR CONTROLLING THE MOVEMENT OF AN OBJECT REPRESENTED ON A DISPLAY DEVICE AND GRAPHIC DISPLAY HAVING SAID INPUT DEVICE
APPAREIL D'ENTREE POUR SIGNAUX DE COMMANDE SERVANT A COMMANDER LE DEPLACEMENT D'UN OBJET REPRESENTE SUR UN DISPOSITIF D'AFFICHAGE, ET AFFICHAGE GRAPHIQUE POURVU D'UN TEL APPAREIL D'ENTREE

(30) Priorität: 08.09.1998 DE 19840939
(43) Veröffentlichungstag der Anmeldung: 27.06.2001
(73) Patentinhaber: Fraunhofer-Gesellschaft zur Förderung der angewandten Forschung e.V., 80686 München (DE)
(72) Erfinder: FRÖHLICH, Bernd, D-53225 Bonn (DE); PLATE, John, D-51063 Köln (DE)
(74) Vertreter: Hilleringmann, Jochen
(86) Internationale Anmeldenummer: EP9906494
(87) Internationale Veröffentlichungsnummer: WO00014676

(56) Entgegenhaltungen:
- US-A- 5 729 249

## Beschreibung

Die Erfindung betrifft ein Eingabegerät für Steuersignale zur Steuerung der Bewegung eines auf einer Anzeigevorrichtung dargestellten Objekts und eine Anzeigevorrichtung, deren Darstellung durch ein Steuersignal-Eingabegerät gesteuert ist.

Steuersignal-Eingabegeräte sind z.B. in Form von sogenannten Mäusen bekannt. Mittels derartiger Eingabegeräte lässt sich z.B. die Cursorbewegung auf einem Bildschirm oder - im Falle eines Anwenderprogramms - z.B. die Darstellung auf einer Anzeigevorrichtung, z.B. Monitor, steuern und beeinflussen. Für eine Vielzahl von Anwendungen wäre es von Vorteil, über darstellungsspezifische Eingabegeräte zu verfügen, die es dem Bediener aufgrund ihres Aufbaus erleichtern, Darstellungen auf einer Anzeigevorrichtung, z.B. einem Monitor, insbesondere aber auch stereographische Darstellungen einfacher zu steuern.

Aus US-A-5 734 370 ist ein Eingabegerät für eine Anzeigevorrichtung bekannt, mit der sich ein Gegenstand auf der Anzeigevorrichtung verschieben lässt. Das bekannte Eingabegerät weist einen Stab auf, der sich innerhalb des Gehäuses des Eingabegeräts um zwei zueinander senkrechte Achsen verschwenken und um seine Längsachse verschieben lässt. Das bekannte Eingabegerät dient zur Steuerung einer virtuellen Billardanwendung.

Ferner ist aus US-A-5 729 249, von der in den Oberbegriffen der selbständigen Ansprüche ausgegangen wird, ein würfelförmiges Eingabegerät bekannt, dessen Seitenflächen sensitive Bereiche oder Betätigungselemente zum Manipulieren eines an einer Anzeigevorrichtung angezeigten Gegenstandes aufweist. Dieses bekannte Eingabegerät hat den Nachteil, dass die Anordnung und Ausrichtung seiner Betätigungsorgane nicht mit den Richtungen übereinstimmen, in die sich der Gegenstand durch die Betätigungsorgane bewegen oder die Darstellung manipulieren lässt.

Der Erfindung liegt die Aufgabe zu Grunde, ein Steuersignal-Eingabegerät der vorstehend genannten Art sowie eine graphische Anzeige mit einem derartigen Eingabegerät zu schaffen, das eine benutzerfreundliche Bedienung ermöglicht.

Zur Lösung dieser Aufgabe wird mit der Erfindung ein Steuersignal-Eingabegerät für eine Anzeigevorrichtung gemäß Anspruch 1 oder Anspruch 14 vorgeschlagen.

Bei dem erfindungsgemäßen Eingabegerät sind Betätigungsorgane, bei deren Betätigung erste Steuersignale zur Steuerung der Anzeigevorrichtung erzeugt werden, auf den drei orthogonal zueinander verlaufenden und sich durch das Gehäuse hindurch erstreckenden Raumachsen angeordnet. Diese Betätigungsorgane ragen zumindest an drei Stellen, vorzugsweise an sechs Stellen aus dem Gehäuse heraus. Bei diesen Betätigungsorganen handelt es sich entweder um linear verschiebbare Elemente, wie beispielsweise Stäbe o.dgl., oder aber um Betätigungselementpaare, wie beispielsweise Taster, die paarweise innerhalb einander abgewandter Bereiche des Gehäuses auf den drei orthogonal zueinander verlaufenden Achsen liegend angeordnet sind. Ein derartiges Steuersignal-Eingabegerät dient insbesondere dazu, eine stereographe Darstellung auf einer Anzeige dreidimensional zu beeinflussen bzw. eine perspektivische Darstellung auf einem Bildschirm entlang der drei der Perspektive entsprechenden Achsen zu steuern oder einen darzustellenden Gegenstand auf der Anzeige zu verschieben, positionieren oder auszurichten. "Verschiebung des Gegenstandes" ist im Rahmen dieser Erfindung weit auszulegen. Es handelt sich dabei allgemein um eine Beeinflussung der Objektdarstellung in Richtung der drei Raumachsen, Beispielsweise ist es mit Hilfe des erfindungsgemäßen Eingabegeräts in komfortabler Weise möglich, auf der Anzeigevorrichtung dargestellte Körper entlang dreier Achsen zu "durchfahren", um sich beispielsweise die unterschiedlichen Schnittansichten entlang der drei Achsen anzeigen zu lassen. Die Schnittansichten sind in diesem Fall das Objekt und werden beim Durchfahren des Körpers "verschoben". Dies kann beispielsweise in der Medizin und bei der Operationsplanung von Vorteil sein, um ein Körperteil, wie z.B. den Kopf, entlang mehrerer Achsen zu durchfahren und damit für den Mediziner bzw. Operateur "transparent" zu machen. Eine weitere Alternative der "Verschiebung des Objekts" ist in der Bewegung eines Objekts innerhalb seiner auf der Anzeigevorrichtung dargestellten Umgebung zu sehen.

Die lagegenaue Ausrichtung des Eingabegeräts relativ zur Darstellung auf der Anzeige dergestalt, dass die drei Achsen, auf denen die Betätigungsorgane des Eingabegeräts angeordnet sind, mit den drei Achsen der Darstellung auf der Anzeige korrespondieren, wird bei der Erfindung dadurch realisiert, dass das Eingabegerät beispielsweise über eine Trägheits-Lage- und Ausrichtungserkennungssensorik bzw. Orientierungs- und/ oder Positionserkennungssensorik verfügt. Eine derartige Sensorik sollte um die drei Raumachsen sensitiv sein. Durch einen derartigen zusätzlichen Sensor ist also gewährleistet, dass sich die vom Bediener erwartete Veränderung der Darstellung auf der Anzeige bei einer Verschwenkung des Eingabegeräts auch tatsächlich einstellen kann. Über diesen Sensor ist also das Eingabegerät quasi mit der Darstellung der Anzeige bzw. umgekehrt gekoppelt.

Der Vorzug des erfindungsgemäßen Eingabegeräts besteht in der Einfachheit der Steuerung der Darstellung auf der Anzeigevorrichtung. Auf Grund der automatischen lagegenauen Ausrichtung des Eingabegeräts mit der Darstellung (Gegenstand) der Anzeige korrespondiert dann die Betätigung der Betätigungsorgane mit einer entsprechenden Veränderung der. Darstellung (Gegenstand) auf der Anzeige. Denn durch die Kopplung der Ausrichtung von Eingabegerät und dargestelltem Objekt entspricht die Anordnung der Betätigungsorgane an bzw. in dem Gehäuse des Eingabegeräts den Achsen, entlang derer bzw. um die sich die Darstellung (z.B. Verschiebung der Schnittebenen eines Gegenstandes oder Verschieben des Gegenstandes selbst entlang dreier orthogonaler Achsen) beeinflussen lässt.

Die Grundidee der Erfindung ist es, dem Benutzer ein Eingabegerät in die Hand zu geben, das ein dreidimensionales Koordinatensystem repräsentiert. Das Eingabegerät besteht in seiner einfachsten Form aus einem Gehäuse, durch das drei orthogonale verschieb- und gegebenenfalls drehbare Stäbe führen, die die drei Koordinatenachsen repräsentieren. Durch eine in das Eingabegerät integrierte Lageerkennungssensorik wird ein Koordinatensystem einer dreidimensionalen Anwendung immer synchron mit der Ausrichtung des Eingabegerätes gehalten. Dadurch resultiert eine Verschiebung bzw. Drehung der Stäbe in der Verschiebung bzw. Drehung eines graphischen Objektes in der entsprechenden Richtung. Wenn zum Beispiel das Eingabegerät so gehalten wird, dass die z-Achse nach oben zeigt, dann wird das graphische. Objekt auch so angezeigt, dass dessen z-Achse auch nach oben zeigt. Wird nun der Stab, der der z-Achse entspricht, nach unten geschoben, so bewegt sich das graphische Objekt auch nach unten. Dreht man das Eingabegerät um 90° nach rechts, so wird das graphische Objekt auch um 90° nach rechts gedreht und eine Verschiebung des z-Achsen-Stabes, der nun nach rechts zeigt, resultiert in einer Verschiebung des graphischen Objektes nach links bzw. rechts. Dieser direkte Zusammenhang zwischen der Manipulation des Eingabegerätes und der daraus resultierenden graphischen Ausgabe macht die Benutzung des Eingabegerätes für den Benutzer sehr einfach und intuitiv verständlich.

In vorteilhafter Weiterbildung der Erfindung ist ferner vorgesehen, dass das Gehäuse eine Quaderform, insbesondere Würfelform mit sechs Seitenwänden aufweist und dass die Betätigungsorgane, wenn sie linear verschiebbar am bzw. im Gehäuse gelagert sind, aus sämtlichen der Seitenwände herausragen, wobei jedes Betätigungsorgan mit seinen Enden aus jeweils zwei einander abgewandten, zueinander parallelen Seitenwänden des Gehäuses herausragt. Sofern drei Paare von Betätigungsorganen, wie beispielsweise drei Paare von Tastern, vorgesehen sind, so befinden sich diese Betätigungsorgane an sämtlichen der Seitenwände des Würfelgehäuses. Alternativ kann das Gehäuse kugelförmig ausgebildet sein. Ferner ist es denkbar, dem Gehäuse eine Außenkontur zu verleihen, die gleich der Außenkontur des darzustellenden Gegenstandes ist. So weist das Gehäuse z.B. die Form eines menschlichen Kopfes auf, wenn ein solcher an der Anzeige dargestellt ist. Die Anordnung der Betätigungsorgane entspricht dabei den Manipulationsmöglichkeiten der Darstellung des Kopfes an der Anzeige.

Durch zusätzliche Betätigungsorgane bzw. durch drehbare oder in sonstiger Weise zusätzlich bewegbare Lagerung der Betätigungsorgane, die z.B. auch auf den linear verschiebbaren Betätigungsorganen angeordnet sein können, ist es möglich, mit dem erfindungsgemäßen Eingabegerät weitere Steuersignale zu erzeugen. So könnten beispielsweise durch zusätzliche Taster oder Schalter Darstellungsfunktionen wie Vergrößern und Verkleinern des dargestellten Körpers oder Objekts bzw. Drehen desselben realisiert werden. Schließlich ist es auch denkbar, dass durch derartige zusätzliche Betätigungsorgane Darstellungsfunktionen wie leichtes Kippen der dargestellten Schnittebene um eine Achse realisiert werden. Diese Anwendung kann beispielsweise in der Konstruktionstechnik bzw. -lehre von Interesse sein.

Als konstruktive Ausgestaltung dieser zusätzlichen Betätigungsorgane kommen neben Tastern und Schalter auch Wippen oder Rändelräder in Frage. Ganz allgemein kann gesagt werden, dass das erfindungsgemäße Eingabegerät mit sämtlichen der üblichen Betätigungsorgane ausgestattet werden kann, wie sie bei elektrischen Geräten grundsätzlich bekannt sind.

Im Falle der Verwendung von aus dem Gehäuse des Eingabegeräts herausragenden verschiebbaren Betätigungsorganen, wie Stäbe o.dgl., ist es für den Bedienungskomfort von Vorteil, wenn die Stäbe mittenzentriert angeordnet und bei Auslenkung (Verschiebung) aus dieser Ruheposition selbsttätig wieder in die mittenzentrierte Position zurückbewegt werden (z.B. durch Rückholfedern). Durch mehr oder weniger weites Hineinbewegen der Enden der Stäbe in das Gehäuse kann die Geschwindigkeit, mit der sich die Veränderung der Darstellung auf der Anzeigevorrichtung erfolgt, gesteuert werden. Diese Steuerungsfunktion gilt in ganz entsprechender Weise auch bei als Tastschalter ausgebildeten Betätigungsorganen, bei denen über die Dauer der Betätigung die Geschwindigkeit der Veränderung der Darstellung gesteuert wird.

Nachfolgend wird die Erfindung anhand der Zeichnung näher erläutert. Im einzelnen zeigen:
- Fig. 1: ein erstes Ausführungsbeispiel eines Anzeigesteuerungs-Eingabegeräts und
- Fig. 2: ein zweites Ausführungsbeispiel eines Eingabegeräts.

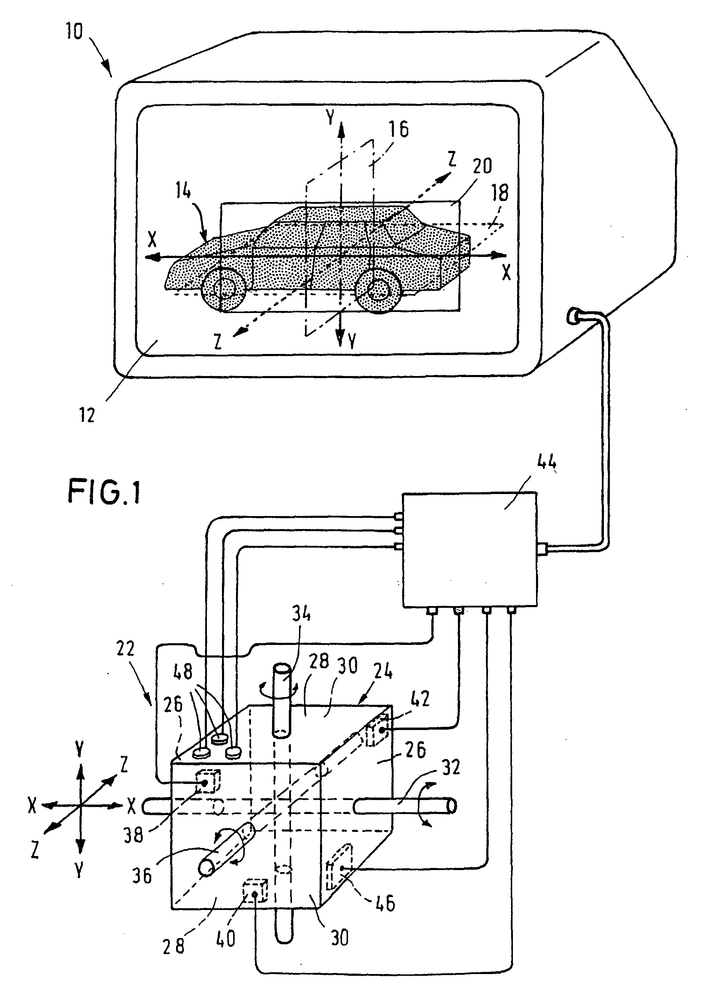

In Fig. 1 ist eine Anzeigevorrichtung 10 in Form eines Monitors dargestellt auf dessen Bildschirm 12 ein Körper 14 perspektivisch dargestellt ist. Bei Eingabe entsprechender Steuerbefehle durch den Bediener ist es möglich, den Körper 14 entlang der x-, y- und z-Achsen zu durchfahren. Mit anderen Worten lassen sich also Schnitte des Körpers 14 darstellen, die in den Ebenen 16,18 und 20 liegen.

Zur Eingabe der erforderlichen Steuersignale dient ein Eingabegerät 22, das ein würfelartiges Gehäuse 24 aufweist. Das Gehäuse 24 weist demzufolge drei Paare von zueinander parallelen Seitenwänden 26,28,30 auf. Durch das Gehäuse 24 hindurch erstrecken sich drei Stäbe 32,34,36, die orthogonal zueinander angeordnet sind und mit ihren Enden aus den Seitenflächen 26,28,30 herausragen. Die Stäbe 32,34,36 sind linear verschiebbar am Gehäuse 24 gelagert; in Abhängigkeit von ihrer Verschiebeposition werden in den Stäben zugeordneten Signalerzeugungsvorrichtungen 38,40,42 Steuersignale erzeugt, die über die Ansteuervorrichtung 44 der Anzeigevorrichtung 10 in diesem Fall zur Verschiebung der Schnittebenen 16,18,20 dienen. Ein Lage- und Ausrichtungssensor 46 erkennt die Position und Ausrichtung des Eingabegeräts 22. Das Ausgangssignal dieses optisch, akustisch oder elektromagnetisch arbeitenden Sensors 46 wird über die Ansteuerungsvorrichtung 44 ebenfalls zur Steuerung der Darstellung auf der Anzeigevorrichtung 10 verwendet. Als Folge davon verdreht sich das Koordinatensystem der Darstellung auf der Anzeigevorrichtung 10 entsprechend der Ausrichtung der Stäbe 32,34,36 des Eingabegeräts 22 im Raum (eingabegerätseitiges Koordinatensystem).

Weitere Funktionen der Darstellung, wie beispielsweise Verschieben des Gegenstandes 14 entlang der drei Achsen des Koordinatensystems der Darstellung können über zusätzliche Betätigungsorgane 48 realisiert werden, die am Gehäuse 24 angeordnet sind. Über diese Betätigungsorgane 48 lässt sich z.B. eine Feinjustage der Position der jeweiligen Ebene und/oder eine geringfügige Neigung der Schnittebenendarstellung um jeweils eine der drei Achsen bewerkstelligen und/oder eine Vergrößerung und Verkleinerung der Darstellung. Über ein weiteres dieser Betätigungsorgane 48 lässt sich z.B. die oben beschriebene "Kopplung" des Eingabegeräts 22 mit der Darstellung auf dem Bildschirm 12 wahlweise aufheben und wiederherstellen. Somit ist es möglich, ähnlich dem Absetzvorgang bei einer Maus vom Pad und dem Wiederaufsetzen der Maus an einer anderen Stelle des Pad den Körper 14 auf dem Bildschirm zu verschieben, und zwar durch mehrfaches Hin- und Herbewegen des Eingabegeräts 22. Die Drehung der Betätigungsorgane 32,34,36 lässt sich z.B. für die lineare Feinpositionierung der Ebenen 16,18,20 nutzen.

Schließlich sind die Stäbe 32,34,36 um ihre Längsachsen drehbar gelagert, um weitere Anzeigefunktionen bzw. Bewegungsfunktionen des Gegenstandes auf dem Bildschirm 12 zu ermöglichen, die durch das Eingabegerät 22 gesteuert werden können.

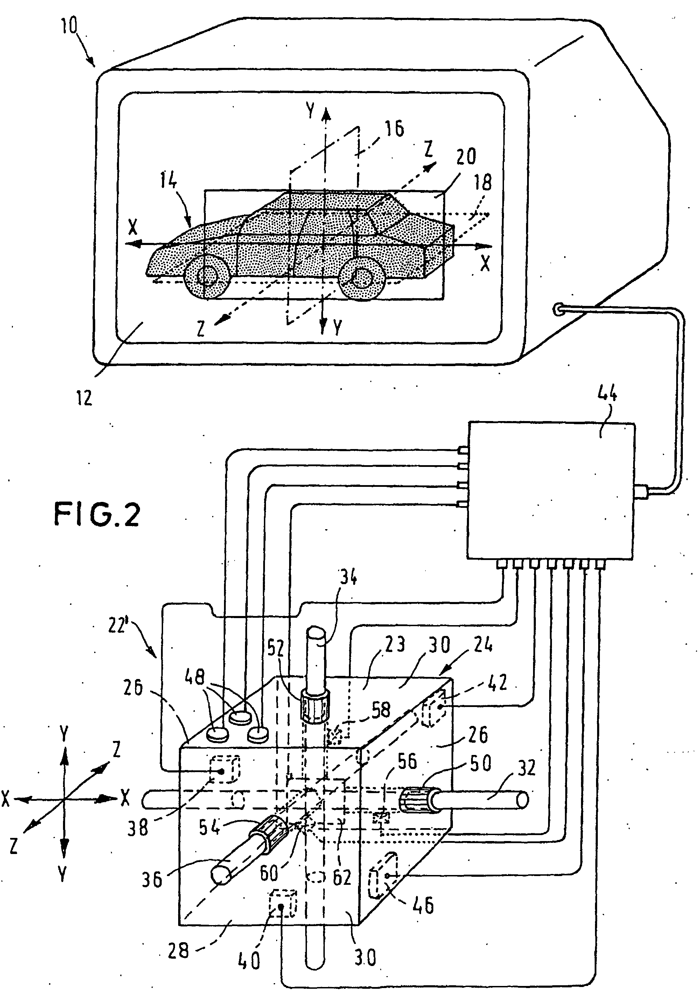

Eine alternative Ausgestaltung eines Eingabegeräts 22' ist in Fig. 2 gezeigt, in der gleiche Teile des Eingabegeräts 22' mit den gleichen Bezugszeichen wie in Fig. 1 benannt sind. Das Eingabegerät 22' unterscheidet sich dadurch von dem Eingabegerät 22 gemäß Fig. 1, dass es zusätzlich über drehbar gelagerte Drehbetätigungsorgane verfügt, die nach Art von Drehknöpfen 50,52,54 oder Drehhülsen ausgebildet sind und konzentrisch um die Stäbe 32,34,36 angeordnet sind. Die Drehung der Drehknöpfe 50,52,54 wird in den bei 56,58,60 gezeigten Einheiten erfasst und in Ansteuersignale zur Beeinflussung der Bewegung und/oder Darstellung des Gegenstandes, insbesondere Rotation des Gegenstandes umgesetzt. Durch die separaten Drehorgane kann die Rotation eines graphischen Objekts vollständig von der Verschiebung getrennt werden, was wünschenswert sein kann. Bei drehbaren Stäben resultiert eine Verschiebung eines Stabes meist auch in einer leichten Drehung des Stabes. Dies stellt kein Problem dar, wenn man die Drehung der Stäbe beispielsweise zur Feinregulierung der Verschiebung nutzt.

Zum anderen weist das Eingabegerät 22' eine Einrichtung 62 zur Beeinflussung der Bewegung der Stäbe 32,34,36 und der Drehknöpfe 50,52,54 auf. Diese Einrichtung 62 ist in Abhängigkeit von der Position des Gegenstandes auf dem Bildschirm 12 gesteuert bzw. aktiviert. Wird der Gegenstand bei Betätigen z.B. der Stäbe 32,34,36 gegen ein Hindernis gefahren, so verhindert die Einrichtung 62 die weitere Bewegung des oder der betreffenden Stabes bzw. Stäbe und Drehknopfes bzw. Drehknöpfe. Die Darstellung auf dem Bildschirm ist also mit der Bewegungsfreiheit der Stäbe 32,34,36 und Drehknöpfe 50,52,54 gekoppelt. Die Einrichtung 62 kann mit den Stäben und Drehknöpfen kinematisch gekoppelte Antriebsvorrichtungen, z.B. Schrittmotoren, aufweisen. Während die Bremsvorrichtungen eine Weiterbewegung der Stäbe 32,34,36 und Weiterdrehung der Drehknöpfe 50,52, 54 verhindert, ist die Antriebsvorrichtung darüber hinaus in der Lage, die Stäbe 32,34,36 und Drehknöpfe 50,52,54 (zurück) zu bewegen, sofern dies je nach Art der Darstellung der Anzeige möglich und gewünscht ist.

Es sei an dieser Stelle angemerkt, dass die aktive Bewegung und/oder Blockierung der stabförmigen Betätigungsorgane 32,34,36 in Abhängigkeit von der Position des Objekts innerhalb seiner auf der Anzeigevorrichtung dargestellten Umgebung unabhängig von dem Vorhandensein der Lageerkennungssensorik realisierbar ist.

## Patentansprüche

1. Steuersignal-Eingabegerät zur Steuerung der Bewegung eines auf einer Anzeigevorrichtung dargestellten Objekts, wobei das Eingabegerät aufweist
- ein Gehäuse (24),
- drei Steuersignal-Erzeugungsvorrichtungen (38,40,42) zur Erzeugung von ersten Steuersignalen für die Anzeigevorrichtung,
- drei orthogonal zueinander angeordnete Betätigungsorganen (32,34,36), von denen jedes mit einer anderen Steuersignal-Erzeugungsvorrichtung (38,40,42) zusammenwirkt,
**dadurch gekennzeichnet,**
- **dass** jedes Betätigungsorgan (32,34,36) an oder in dem Gehäuse (24) entlang einer von drei orthogonalen Raumachsen (x,y,z) linear verschiebbar gelagert ist und innerhalb jeweils mindestens eines von zwei einander abgewandten Bereichen des Gehäuses (24) nach außen über das Gehäuse (24) vorsteht, wobei die Steuersignal-Erzeugungsvorrichtungen (38, 40,42) in Abhängigkeit von der Verschiebepositionen der Betätigungsorgane (32,34,36) die ersten Steuersignale zur Verschiebung des Objekts auf der Anzeigevorrichtung entlang der drei den Raumachsen des Gehäuses (24) entsprechenden Richtungen erzeugen, und
- **dass** eine Lageerkennungssensorik (46) vorgesehen ist, die in oder an dem Gehäuse (24) angeordnet ist, wobei die Lageerkennungssensorik (46) die Orientierung und/oder Position des Gehäuses (24) erfasst und ein entsprechendes Steuersignal für die Anzeigevorrichtung zur Ausrichtung des Objekts auf der Anzeigevorrichtung entsprechend der Orientierung und Position des Gehäuses (24) erzeugt.

2. Steuersignal-Eingabegerät nach Anspruch 1, **dadurch gekennzeichnet, dass** die Betätigungsorgane (32,34,36) um eine Ruheposition zentriert im oder am Gehäuse (24) gelagert sind und sich bei Auslenkung um die Ruheposition selbsttätig in diese zurückbewegen.

3. Steuersignal-Eingabegerät nach Anspruch 2, **dadurch gekennzeichnet, dass** die Betätigungsorgane (32,34,36) mittenzentriert gelagert sind.

4. Steuersignal-Eingabegerät nach Anspruch 2 oder 3, **dadurch gekennzeichnet, dass** die Steuersignal-Erzeugungsvorrichtungen (38,40,42) nur bei einer Auslenkung aus der Ruheposition Steuersignale in Abhängigkeit von der Auslenkrichtung und/oder dem Auslenkmaß erzeugen.

5. Steuersignal-Eingabegerät nach einem der Ansprüche 1 bis 4, **dadurch gekennzeichnet, dass** die Betätigungsorgane (32,34,36) um in ihre Verschiebungsrichtungen (x,y,z) verlaufende Achsen drehbar am bzw. in dem Gehäuse (24) gelagert sind und dass die Steuersignal-Erzeugungsvorrichtungen (38,40,42) in Abhängigkeit von den Drehstellungen der Betätigungsorgane (32,34,36) zweite Steuersignale für die Anzeigevorrichtung (10) erzeugen.

6. Steuersignal-Eingabegerät nach einem der Ansprüche 1 bis 5, **dadurch gekennzeichnet, dass** pro Betätigungsorgan (32,34,36) ein Drehbetätigungsorgan (50,52,54) vorgesehen ist, das um die in Verschiebungsrichtung (y;z) des zugehörigen Betätigungsorgans (32,34,36) verlaufende Achse drehbar ist, und dass die Steuersignal-Erzeugungsvorrichtungen (38,40, 42) oder zusätzliche Steuersignal-Erzeugungsvorrichtungen (56,58,60) in Abhängigkeit von der Drehstellung der Drehbetätigungsorgane (50,52,54) zweite Steuersignale für die Anzeigevorrichtung (10) erzeugen.

7. Steuersignal-Eingabegerät nach Anspruch 6, **dadurch gekennzeichnet, dass** die Betätigungsorgane (32,34,36) die Drehbetätigungsorgane (50,52,54) durchdringen.

8. Steuersignal-Eingabegerät nach einem der Ansprüche 1 bis 7, **dadurch gekennzeichnet, dass** an bzw. in dem Gehäuse (24) Taster oder Schalter oder weitere Betätigungsorgane (48) zur Erzeugung weiterer Steuersignale für die Anzeigevorrichtung (10) angeordnet sind.

9. Steuersignal-Eingabegerät nach einem der Ansprüche 1 bis 8, **dadurch gekennzeichnet, dass** pro Betätigungsorgan (32,34,36) und - sofern vorhanden - pro Drehbetätigungsorgan (50,52,54) eine Einrichtung (62) zur Verhinderung der weiteren Verschiebung bzw. Verdrehung vorgesehen ist, die von der Anzeigevorrichtung in Abhängigkeit von der Position steuerbar ist, in der sich ein auf der Anzeigevorrichtung dargestellter Gegenstand innerhalb einer ebenfalls auf der Anzeigevorrichtung dargestellten Umgebung befindet.

10. Steuersignal-Eingabegerät nach Anspruch 9, **dadurch gekennzeichnet, dass** die Verhinderungseinrichtung (62) eine mechanische Brems-/ Blockiervorrichtung zur Blockierung des betreffenden Betätigungsorgans (32,34,36) und/oder des Drehorgans (50,52,54) oder eine Antriebsvorrichtung zum Bewegen oder Drehen des Betätigungsorgans (32,34,36) und/oder Drehbetätigungsorgans (50,52,54) aufweist.

11. Steuersignal-Eingabegerät nach einem der Ansprüche 1 bis 10, **dadurch gekennzeichnet, dass** das Gehäuse (24) eine Quaderform aufweist, dass die Betätigungsorgane (32,34,36) aus sämtlichen der Seitenwände (26,28, 30) des Gehäuses (24) herausragen und dass, sofern vorhanden, die Taster, Schalter oder weiteren Betätigungsorgane (48) auf sämtlichen der Seitenwände (26, 28,30) des Gehäuses (24) angeordnet sind.

12. Steuersignal-Eingabegerät nach Anspruch 11, **dadurch gekennzeichnet, dass** das Gehäuse (24) eine Würfelform aufweist.

13. Steuersignal-Eingabegerät nach einem der Ansprüche 1 bis 10, **dadurch gekennzeichnet, dass** das Gehäuse eine Kugelform aufweist, dass die Betätigungsorgane in im wesentlichen diametral gegenüberliegenden Bereichen aus dem Gehäuse herausragen und dass, sofern vorhanden, die Taster, Schalter oder weiteren Betätigungsorgane (48) in diesen Bereichen angeordnet sind.

14. Steuersignal-Eingabegerät zur Steuerung der Bewegung eines auf einer Anzeigevorrichtung dargestellten Objekts, wobei das Eingabegerät aufweist:
- ein Gehäuse (24),
- drei Steuersignal-Erzeugungsvorrichtungen (38,40,42) zur Erzeugung von ersten Steuersignalen und
- drei Paare von Betätigungsorganen, wobei für jedes Paar gilt, dass die beiden Betätigungsorgane an unterschiedlichen Bereichen des Gehäuses (24) angeordnet sind, die auf jeweils einer von drei zueinander orthogonalen und durch das Gehäuse (24) verlaufenden Raumachsen (x,y,z) liegen, wobei jedes Paar von Betätigungsorganen mit jeweils einer anderen der Steuersignal-Erzeugungsvorrichtung (38,40,42) zusammenwirkt und wobei die Steuersignal-Erzeugungsvorrichtungen (38,40,42) in Abhängigkeit von dem Betätigungszustand der Betätigungsorgane die ersten Steuersignale zur Verschiebung des Objekts auf der Anzeigevorrichtung entlang der drei den Raumachsen des Gehäuses (24) entsprechenden Richtungen erzeugen,
**gekennzeichnet durch**
- eine Lageerkennungssensorik (46), die in oder an dem Gehäuse (24) angeordnet ist, wobei die Lageerkennungssensorik (46) die Orientierung und/oder Position des Gehäuses (24) erfasst und ein entsprechendes Steuersignal für die Anzeigevorrichtung zur Ausrichtung des Objekts auf der Anzeigevorrichtung entsprechend der Orientierung und Position des Gehäuses (24) erzeugt.

15. Steuersignal-Eingabegerät nach Anspruche 14, **dadurch gekennzeichnet, dass** das Gehäuse (24) eine Quaderform aufweist und dass, sofern vorhanden, die Taster, Schalter oder die Betätigungsorgane (48) auf sämtlichen der Seitenwände (26,28,30) des Gehäuses (24) angeordnet sind.

16. Steuersignal-Eingabegerät nach Anspruch 15, **dadurch gekennzeichnet, dass** das Gehäuse (24) eine Würfelform aufweist.

17. Steuersignal-Eingabegerät nach Anspruch 14, **dadurch gekennzeichnet, dass** das Gehäuse eine Kugelform aufweist, dass die Betätigungsorgane in im wesentlichen diametral gegenüberliegenden Bereichen aus dem Gehäuse herausragen und dass, sofern vorhanden, die Taster, Schalter oder der Betätigungsorgane (48) in diesen Bereichen angeordnet sind.

18. Steuersignal-Eingabegerät nach einem der Ansprüche 1 bis 14, **dadurch gekennzeichnet, dass** das Gehäuse im wesentlichen die Außenkontur eines an einer Anzeigevorrichtung anzuzeigenden Gegenstandes aufweist und dass die Betätigungsorgane entsprechend den Achsen, entlang derer der Gegenstand in seiner Darstellung steuerbar ist, angeordnet sind.

## Claims

1. An input device for control signals for controlling the movement of an object represented on a display device, the input device comprising
- a housing (24),
- three control signal generating devices (38, 40, 42) for generating first control signals to the display device,
- three mutually orthogonal actuating elements (32, 34. 36), each actuating element (32, 34, 36) respectively cooperating with a different one of the control signal generating devices (38, 40, 42),
**characterized in that**
- each actuating element (32, 34. 36) is supported at or in the housing (24) for linear displacement along one of three orthogonal spatial axes (x, y, z) and projecting outward beyond the housing (24) within at least one of two opposite portions of the housing (24), respectively, wherein, in dependence on the displacement position of the actuating elements (32, 34, 36), the control signal generating devices (38, 40, 42) generate the first control signals for displacement of the object on the display device along three directions corresponding to the spatial axes of the housing (24) on the display device, and
- a position detection sensor arrangement (46) is provided in or at the housing (24), the position detection arrangement (46) sensing the orientation and/orthe position of the housing (24) and generating a corresponding control signal to the display device for orienting the object on the display device according to the orientation and position of the housing (24).

2. The control signal input device of claim 1, wherein the actuating elements (32, 34, 36) are supported in or at the housing (24) centered about a rest position, and automatically move back into the rest position upon displacement from the same.

3. The control signal input device of claim 2, wherein the actuating elements (32, 34, 36) are supported centrical.

4. The control signal input device of claim 2 or 3, wherein, only upon a displacement from the rest position, will the control signal generating devices (38, 40, 42) generate control signals in dependence on the direction and/or degree of displacement.

5. The control signal input device of one of claims 1 to 4, wherein the actuating elements (32, 34, 26) are supported at or in the housing (24) for rotation about their axes (x, y, z) extending in the respective direction of displacement and wherein the control signal generating devices (38, 40, 42) generate second control signals to the display device (10) in dependence on the rotational positions of the actuating elements (32, 34, 26).

6. The control signal input device of one of claims 1 to 5, wherein a rotary actuating element (50, 52, 54) is provided peractuating element (32, 34, 36), which is rotatable around the axis of the associated actuating element (32, 34, 26) extending in the direction of displacement (x; y; z) and wherein the control signal generating devices (38, 40, 42) or additional control signal generating devices (56, 58, 60) generate second control signals to the display device (10) in dependence on the rotational position of the rotary actuating elements (50, 52, 54).

7. The control signal input device of claim 6, wherein the actuating elements (32, 34, 36) penetrate the rotary actuating elements (50, 52, 54).

8. The control signal input device of one of claims 1 to 7, wherein at or in the housing (24), switches or key switches or other actuating elements (48) are arranged for providing further control signals to the display device (10).

9. The control signal input device of one of claims 1 to 8, wherein, per actuating element (32, 34, 36) and - if provided - per rotary actuating element (50, 52, 54), one means (62) for preventing further displacement or turning, the means being controllable by the display device in dependence on the position an object represented on the display device is in within an environment also represented on the display device.

10. The control signal input device of claim 9, wherein the preventing means (62) comprises a mechanical braking/blocking device for blocking the respective actuating element (32, 34, 36) and/or the rotary element (50, 52, 54), or a drive means for moving or turning the actuating element (32, 34, 36) and/or the rotary actuating element (50, 52, 54).

11. The control signal input device of one of claims 1 to 10, wherein the housing (24) has the shape of a parallelepiped, and the actuating elements (32, 34, 36) protrude from all side walls (26, 28, 30) of the housing (24), and that - if provided - the keys, key switches or other actuating elements (48) are arranged on all side walls (26, 28, 30) of the housing (24).

12. The control signal input device of claim 11, wherein the housing (24) is cubic in shape.

13. The control signal input device of one of claims 1 to 10, wherein the housing is spherical in shape and the actuating elements protrude from the housing in substantially diametrically opposite regions and - if provided - the keys, key switches or other actuating elements (48) are arranged in these regions.

14. An input device for control signals for controlling the movement of an object represented on a display device, the input device comprising
- a housing (24),
- three control signal generating devices (38, 40, 42) for generating first control signals to the display device,
- three pairs of actuating elements, both actuating elements in each pair being arranged at different portions of the housing (24) lying on a respective one of three orthogonal spatial axes (x, y, z) extending through the housing (24), each pair of actuating elements respectively cooperating with a different one of the control signal generating devices (38, 40, 42), and wherein, in dependence on the actuating condition of the actuating elements, the control signal generating devices (38, 40, 42) generate the first control signals for displacement of the object on the display device along three directions corresponding to the spatial axes of the housing (24) on the display device,
**characterized by**
- a position detection sensor arrangement (46) provided in or at the housing (24), the position detection arrangement (46) sensing the orientation and/or the position of the housing (24) and generating a corresponding control signal to the display device for orienting the object on the display device according to the orientation and position of the housing (24).

15. The control signal input device of claim 14, wherein the housing (24) has the shape of a parallelepiped, and - if provided - the keys, key switches or other actuating elements (48) are arranged on all side walls (26, 28, 30) of the housing (24).

16. The control signal input device of claim 15, wherein the housing (24) is cubic in shape.

17. The control signal input device of claim 14, wherein the housing is spherical in shape and the actuating elements protrude from the housing in substantially diametrically opposite regions and - if provided - the keys, key switches or other actuating elements (48) are arranged in these regions.

18. The control signal input device of one of claims 1 to 14, wherein the housing (24) substantially corresponds to the outer contour of an object to be displayed on the display device and the actuating elements are arranged corresponding to the axes along which the object may be controlled in its representation.

## Revendications

1. Appareil d'entrée de signal de commande pour la commande du déplacement d'un objet représenté sur un dispositif d'affichage, l'appareil d'entrée présentant :
- un boîtier (24),
- trois dispositifs de génération de signal de commande (38, 40, 42) pour la génération de premiers signaux de commande pour le dispositif d'affichage,
- trois organes d'actionnement (32, 34, 36) disposés de façon perpendiculaire entre eux, dont chacun coopère avec un autre dispositif de génération de commande (38, 40, 42),
**caractérisé**
- **en ce que** chaque organe d'actionnement (32, 34, 36) est logé sur ou dans le boîtier (24) de façon à pouvoir coulisser linéairement le long de l'un des trois axes orthogonaux de l'espace (x, y, z) et dépasse vers l'extérieur du boîtier (24) à l'intérieur de respectivement au moins l'une de deux zones opposées du boîtier (24), les dispositifs de génération de signal de commande (38, 40, 42) générant en fonction des positions de déplacement des organes d'actionnement (32, 34, 36) les premiers signaux de commande pour le déplacement de l'objet sur le dispositif d'affichage le long des trois directions correspondant aux axes de l'espace du boîtier (24), et
- **en ce qu'**il est prévu un capteur de reconnaissance de position (46), qui est disposé dans ou sur le boîtier (24), les capteurs de reconnaissance de position (46) enregistrant l'orientation et/ou la position du boîtier (24) et générant un signal de commande approprié pour le dispositif d'affichage pour l'orientation de l'objet sur le dispositif d'affichage en fonction de l'orientation et de la position du boîtier (24).

2. Appareil d'entrée de signal de commande selon la revendication 1, **caractérisé en ce que** les organes d'actionnement (32, 34, 36) sont logés de façon centrée dans ou sur le boîtier (24) autour d'une position de repos et se recule automatiquement, en cas de déviation autour de la position de repos, dans cette position.

3. Appareil d'entrée de signal de commande selon la revendication 2, **caractérisé en ce que** les organes d'actionnement (32, 34, 36) sont logés de façon centrée au milieu.

4. Appareil d'entrée de signal de commande selon la revendication 2 ou 3, **caractérisé en ce que** les dispositifs de génération de signal de commande (38, 40, 42) génèrent, seulement dans le cas d'une déviation de la position de repos, des signaux de commande en fonction du sens de déviation et/ou de la cote de déviation.

5. Appareil d'entrée de signal de commande selon l'une quelconque des revendications 1 à 4, **caractérisé en ce que** les organes d'actionnement (32, 34, 36) sont logés sur ou dans le boîtier (24) de façon à pouvoir tourner dans leurs axes allant dans leurs directions de déplacement (x, y, z) et **en ce que** les dispositifs de génération de signal de commande (38, 40, 42) génèrent deux signaux de commande pour le dispositif d'affichage (10) en fonction des positions de rotation des organes d'actionnement (32, 34, 36).

6. Appareil d'entrée de signal de commande selon l'une quelconque des revendications 1 à 5, **caractérisé en ce qu'**il est prévu par organe d'actionnement (32, 34, 36) un organe d'actionnement de rotation (50, 52, 54), qui peut tourner autour de l'axe allant dans le sens de déplacement (y ; z) de l'organe d'actionnement (32, 34, 36) concerné, et **en ce que** les dispositifs de génération de signal de commande (38, 40, 42) ou des dispositifs supplémentaires de génération de signal de commande (56, 58, 60) génèrent des seconds signaux de commande pour le dispositif d'affichage (10) en fonction de la position de rotation des organes d'actionnement de rotation (50, 52, 54).

7. Appareil d'entrée de signal de commande selon la revendication 6, **caractérisé en ce que** les organes d'actionnement (32, 34, 36) traversent les organes d'actionnement de rotation (50, 52, 54).

8. Appareil d'entrée de signal de commande selon l'une quelconque des revendications 1 à 7, **caractérisé en ce que**, sur ou dans le boîtier (24), sont disposés des bouton-poussoirs ou des interrupteurs sans autres organes d'actionnement (48) pour la génération d'autres signaux de commande pour le dispositif d'affichage (10).

9. Appareil d'entrée de signal de commande selon l'une quelconque des revendications 1 à 8, **caractérisé en ce que**, par organe d'actionnement (32, 34, 36) et, s'il y a en a un, par organe d'actionnement de rotation (50, 52, 54), il est prévu un dispositif (62) pour empêcher le déplacement ou la rotation ultérieure, qui peut être commandé par le dispositif d'affichage en fonction de la position dans laquelle un objet représenté sur le dispositif d'affichage se trouve à l'intérieur d'un environnement également représenté sur le dispositif d'affichage.

10. Appareil d'entrée de signal de commande selon la revendication 9, **caractérisé en ce que** le dispositif d'empêchement (62) présente un dispositif de freinage/blocage mécanique pour le blocage de l'organe d'actionnement (32, 34, 36) concerné et/ou de l'organe de rotation (50, 52, 54) ou un dispositif d'entraînement pour le déplacement ou la rotation de l'organe d'actionnement (32, 34, 36) et/ou de l'organe d'actionnement de rotation (50, 52, 54).

11. Appareil d'entrée de signal de commande selon l'une quelconque des revendications 1 à 10, **caractérisé en ce que** le boîtier (24) présente une forme de parallélépipède, **en ce que** les organes d'actionnement (32, 34, 36) dépassent de l'ensemble des parois latérales (26, 28, 30) du boîtier (24) et **en ce que**, dans la mesure où il y en a, des boutons-poussoirs interrupteurs ou autres organes d'actionnement (48) sont disposés sur l'ensemble des parois latérales (26, 28, 30) du boîtier (24).

12. Appareil d'entrée de signal de commande selon la revendication 11, **caractérisé en ce que** le boîtier (24) présente une forme de cube.

13. Appareil de signal de commande selon l'une quelconque des revendications 1 à 10, **caractérisé en ce que** le boîtier présente une forme de sphère, **en ce que** les organes d'actionnement dépassent du boîtier dans des zones sensiblement diamétralement opposées et **en ce que**, s'il y en a, les bouton-poussoirs, interrupteurs ou autres organes d'actionnement (48) sont disposés dans ces zones.

14. Appareil d'entrée de signal des commandes pour la commande du déplacement d'un objet représenté sur un dispositif d'affichage, l'appareil d'entrée comprenant
- un boîtier (24),
- trois dispositifs de génération de signal de commande (38, 40, 42) pour la génération de premiers signaux de commande et
- trois paires d'organes d'actionnement, sachant que pour chaque paire les deux organes d'actionnement sont disposés dans des zones différentes du boîtier (24), qui se situent sur respectivement l'un des trois axes de l'espace (x, y, z) perpendiculaires entre eux et passant à travers le boîtier (24), chaque paire d'organes d'actionnement coopérant avec respectivement un autre des dispositifs de génération de signal de commande (38, 40, 42) et les dispositifs de génération de signal de commande (38, 40, 42) générant en fonction de l'état d'actionnement des organes d'actionnement les premiers signaux de commande pour l'orientation de l'objet sur le dispositif d'affichage le long des trois directions correspondant aux axes de l'espace du boîtier (24),
**caractérisé par**
un capteur de reconnaissance de position (46), qui est disposé dans ou sur le boîtier (24), le capteur de reconnaissance de position (46) enregistrant l'orientation et/ou la position du boîtier (24) et générant un signal de commande approprié pour le dispositif d'affichage pour l'orientation de l'objet sur le dispositif d'affichage en fonction de l'orientation et de la position du boîtier (24).

15. Appareil d'entrée de signal de commande selon la revendication 14, **caractérisé en ce que** le boîtier (24) présente une forme de parallélépipède et **en ce que**, s'il y en a, les bouton-poussoirs, interrupteurs ou les organes d'actionnement (48) sont disposés sur l'ensemble des panneaux latéraux (26, 28, 30) du boîtier (24).

16. Appareil d'entrée de signal de commande selon la revendication 15, **caractérisé en ce que** le boîtier (24) présente une forme de cube.

17. Appareil d'entrée de signal de commande selon la revendication 14, **caractérisé en ce que** le boîtier présente une forme sphérique, **en ce que** les organes d'actionnement dépassent du boîtier dans des zones sensiblement diamétralement opposées et **en ce que**, s'il y en a, les boutons-poussoirs interrupteurs ou les organes d'actionnement (48) sont disposés dans ces zones.

18. Appareil d'entrée de signal de commande selon l'une quelconque des revendications 1 à 14, **caractérisé en ce que** le boîtier présente sensiblement le contour extérieur d'un objet à afficher sur le dispositif d'affichage et **en ce que** les organes d'actionnement sont disposés en fonction des axes, le long desquels l'objet doit être contrôlé dans sa représentation.
